# EUROPÄISCHE PATENTSCHRIFT

(11) **EP 1 679 757 B1**
(45) Veröffentlichungstag und Bekanntmachung des Hinweises auf die Patenterteilung: **17.06.2009**
(21) Anmeldenummer: 05111852.9
(22) Anmeldetag: 08.12.2005
(51) Int. Cl.: H01M 8/04

(54) **Brennstoffzellensystem**
Fuel cell system
Système de pile à combustible

(30) Priorität: 11.01.2005 DE 102005001361
(43) Veröffentlichungstag der Anmeldung: 12.07.2006
(73) Patentinhaber: J. Eberspächer GmbH & Co. KG, 73730 Esslingen (DE)
(72) Erfinder: Kaupert, Andreas, 73730 Esslingen (DE)
(74) Vertreter: Bongen, Renaud & Partner

(56) Entgegenhaltungen:
- US-A1- 2003 138 681
- US-A1- 2003 235 732

## Beschreibung

Die vorliegende Erfindung betrifft ein Brennstoffzellensystem eines Kraftfahrzeugs.

Ein Brennstoffzellensystem umfasst üblicherweise eine Brennstoffzelle sowie einen Brenner oder Restgasbrenner oder Hauptbrenner. In der Brennstoffzelle werden im Betrieb ein Wasserstoffgas enthaltendes Anodengas und ein Sauerstoffgas enthaltendes Kathodengas verstromt. Dabei werden Wasserstoffgas und Sauerstoffgas in Wasser und Strom umgesetzt. Im Hauptbrenner werden das Anodenabgas der Brennstoffzelle sowie das Kathodenabgas der Brennstoffzelle verbrannt, um schadstoffarme Emissionen zu erhalten. Die dabei freigesetzte Wärme kann zum Vorwärmen der Edukte des Brennstoffzellenprozesses genutzt werden.

Ein Brennstoffzellensystem dieser Art kann in einem Kraftfahrzeug als zusätzliche Stromquelle vorgesehen sein, um bei einem Fahrzeug mit hohem Strombedarf die Stromversorgung zu gewährleisten. Das Brennstoffzellensystem kann dabei einen von einer Brennkraftmaschine des Fahrzeugs angetriebenen Generator, sogenannte Lichtmaschine, in Phasen geringer Motorleistung unterstützen.

Damit der erwünschte Brennstoffzellenprozess ordnungsgemäß ablaufen kann, benötigen einzelne Komponenten des Brennstoffzellensystems, wie zum Beispiel die Brennstoffzelle oder ein Reformer zum Erzeugen des Anodengases aus einem wasserstoffhaltigen Brennstoff, eine bestimmte Mindest-Betriebstemperatur. Zum Starten des Brennstoffzellensystems müssen demnach die genannten Komponenten entsprechend vorgewärmt werden. Wünschenswert ist dabei eine möglichst kurze Vorwärmzeit.

Die vorliegende Erfindung beschäftigt sich mit dem Problem, für ein Brennstoffzellensystem der eingangs genannten Art eine verbesserte Ausführungsform anzugeben, die insbesondere eine relativ kurze Vorwärmzeit aufweist, und bei der eine Brennstofführung innerhalb der Isolationsbox vermieden wird.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, in das Brennstoffzellensystem einen konventionellen Brenner oder Startbrenner zu integrieren, mit dem ein wasserstoffhaltiger Brennstoff mit einem Sauerstoffgas enthaltenden Oxidator, zum Beispiel Luft, verbrannt werden kann. Dabei erfolgt die Einbindung dieses Startbrenners in das Brennstoffzellensystem so, dass die Verbrennungsabgase des Startbrenners während eines Startbetriebs im Brennstoffzellensystem das Anodengas oder das Anodenabgas oder das Kathodengas oder das Kathodenabgas bilden oder dem jeweiligen Gas zugemischt werden. Auf diese Weise kann das jeweilige Gas intensiv vorgeheizt werden, was zu einer entsprechenden Temperaturerhöhung in der von diesem Gas durchströmten Komponente führt. Eine Vorwärmung des Anodengases oder des Kathodengases führt somit zu einer entsprechenden Vorwärmung der Brennstoffzelle. Dabei wird die Brennstoffzelle kathodenseitig oder anodenseitig von den Startbrennerabgasen durchströmt. Im Unterschied dazu wird bei einer Vorwärmung der Anodenabgase oder der Kathodenabgase zunächst nur der Hauptbrenner vorgewärmt bzw. dessen Abgase. Da üblicherweise die Wärme des Hauptbrenners bzw. die Wärme der Hauptbrennerabgase zum Vorwärmen der Edukte des Brennstoffzellensystems genutzt wird, führt das Vorwärmen der Anodenabgase oder der Kathodenabgase zum selben Ziel. Wesentlicher Unterschied dieser Variante ist, dass hierbei die Startbrennerabgase nicht in die Brennstoffzelle gelangen. Insoweit liegt hier eine indirekt Aufheizung der Brennstoffzelle vor.

Der konventionell arbeitende Startbrenner kann rasch in Betrieb genommen werden und stellt unmittelbar nach seiner Inbetriebnahme in seinen Abgasen bereits Wärme zur Verfügung, die zum Vorwärmen des Brennstoffzellensystems bzw. der Brennstoffzelle genutzt werden kann. Die Startphase des Brennstoffzellensystems, also die Zeit, bis die relevanten Komponenten des Brennstoffzellensystems ihre jeweilige Mindest-Betriebstemperatur aufweisen, lässt sich dadurch verkürzen.

Vorzugsweise wird der Startbrenner in eine Gasleitung des Brennstoffzellensystems eingebaut, die ohnehin vorhanden ist und dementsprechend zur Realisierung des Startbrenners nur geringfügig modifiziert werden muss. Beispielsweise muss lediglich in einem Längsabschnitt der jeweiligen Gasleitung der Strömungsquerschnitt zur Ausbildung einer Brennkammer erweitert werden. Beispielsweise kann daher der Startbrenner in eine Anodengasleitung eingebaut sein, die im Normalbetrieb des Brennstoffzellensystems das Anodengas der Brennstoffzelle zuführt. Alternativ kann der Startbrenner in eine Kathodengasleitung eingebaut sein, die im Normalbetrieb des Brennstoffzellensystems das Kathodengas der Brennstoffzelle zuführt. Ebenso ist es möglich, den Startbrenner in einer Oxidatorleitung einzubauen, die im Normalbetrieb des Brennstoffzellensystems den Sauerstoffgas enthaltenden Oxidator dem Hauptbrenner zuführt. Üblicherweise wird dem Hauptbrenner über eine derartige zusätzliche Oxidatorleitung Oxidator, also in der Regel Luft, zugeführt, um kältere Hauptbrennerabgase zu erhalten. Dies ist wichtig, um einen, dem Hauptbrenner nachgeschalteten Wärmeübertrager möglichst kompakt bauen zu können und dabei gleichzeitig die Gefahr einer Überhitzung dieses Wärmeübertragers zu vermeiden. Die Integration des Startbrenners in eine im Brennstoffzellensystem ohnehin vorhandene Gasleitung reduziert den zur Realisierung des erfindungsgemäßen Brennstoffzellensystems benötigten Aufwand. Des weiteren baut das erfindungsgemäße Brennstoffzellensystem dadurch kompakt.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,

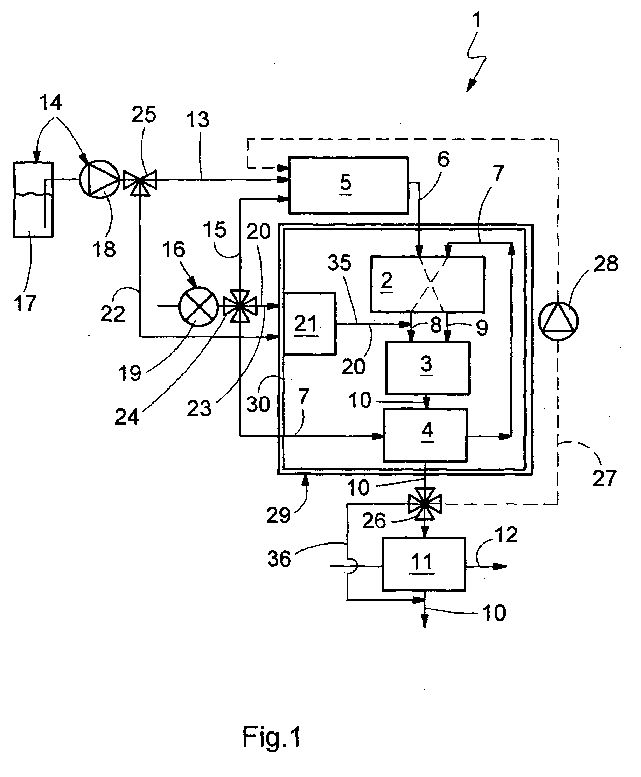

- Fig. 1 bis 4: jeweils eine schaltplanartige Prinzipdarstellung eines erfindungsgemäßen Brennstoffzellensystems, jedoch bei unterschiedlichen Ausführungsformen.

Entsprechend den Fig. 1 bis 4 umfasst ein erfindungsgemäßes Brennstoffzellensystem 1 eines Kraftfahrzeugs zumindest eine Brennstoffzelle 2, einen Hauptbrenner 3, einen Wärmeübertrager 4 sowie einen Reformer 5. Die Brennstoffzelle 2 erhält im Normalbetrieb über eine Anodengasleitung 6 ein Wasserstoffgas enthaltendes Anodengas und über eine Kathodengasleitung 7 ein Sauerstoffgas enthaltendes Kathodengas. In der Brennstoffzelle 2 läuft im Normalbetrieb ein üblicher Brennstoffzellenprozess ab, bei dem das Wasserstoffgas und das Sauerstoffgas unter Abgabe von Strom reagieren, sogenannte Verstromung von Anodengas und Kathodengas. Der dabei gebildete Strom kann über hier nicht gezeigte Stromanschlüsse abgegriffen und z.B. dem Bordnetz des Fahrzeugs bereitgestellt werden. Zweckmäßig dient das Brennstoffzellensystem 1 als zusätzliche Stromversorgung des Fahrzeugs.

Eine Kathodenabgasleitung 8 führt im Normalbetrieb Kathodenabgas von der Brennstoffzelle 2 zum Hauptbrenner 3. Kathodenabgas ist dabei ein Kathodengas mit reduziertem Sauerstoffgehalt. Des weiteren führt im Normalbetrieb eine Anodenabgasleitung 9 Anodenabgas von der Brennstoffzelle 2 zum Hauptbrenner 3. Anodenabgas ist dabei Anodengas mit reduziertem Wasserstoffanteil und deutlich erhöhtem Wasseranteil. Im Normalbetrieb des Brennstoffzellensystems 1 erfolgt im Hauptbrenner 3 eine Verbrennung von Anodenabgas und Kathodenabgas, wobei heiße Verbrennungsabgase entstehen, die im Folgenden als Hauptbrennerabgase bezeichnet werden. Über eine Hauptbrennerabgasleitung 10 werden die Hauptbrennerabgase vom Hauptbrenner 3 abgeführt. Die Hauptbrennerabgasleitung 10 führt dabei durch den Wärmeübertrager 4 sowie optional durch eine Standheizeinrichtung 11.

Der Wärmeübertrager 4 ist einerseits in die Hauptbrennerabgasleitung 10 und andererseits in die Kathodengasleitung 7 eingebunden. Auf diese Weise kann das heiße Hauptbrennerabgas Wärme an das Kathodengas abgeben, um dieses vorzuwärmen.

Die vorstehend genannte Standheizeinrichtung 11 kann ebenfalls in Form eines Wärmeübertragers ausgestaltet sein, der einerseits in die Hauptbrennerabgasleitung 10 und andererseits in einen Kühlkreis 12 einer Brennkraftmaschine des Fahrzeugs, das mit dem erfindungsgemäßen Brennstoffzellensystem 1 ausgestattet ist, eingebunden ist. Auf diese Weise kann weitere Wärme aus dem Hauptbrennerabgas auf den Kühlkreis 12 übertragen werden. Hierdurch können der Kühlkreis 12 und die darin eingebundenen Komponenten erwärmt werden. Beispielsweise kann auf diese Weise die Brennkraftmaschine vorgeheizt oder zugeheizt werden. Ebenso ist es möglich, einen Fahrzeuginnenraum zu beheizen, wenn in den Kühlkreis 12 ein entsprechender Wärmeübertrager zum Erzeugen von Warmluft eingebunden ist oder wenn die Standheizeinrichtung 11 ein solcher Wärmeübertrager zum Erzeugen von Warmluft ist oder umfasst.

Das Brennstoffzellensystem 1 kann grundsätzlich unabhängig von der Brennkraftmaschine betrieben werden, also insbesondere auch bei ausgeschalteter Brennkraftmaschine. In Verbindung mit der Standheizeinrichtung 11 kann mit dem Brennstoffzellensystem 1 somit eine Standheizung zum Beheizen des Fahrzeuginnenraums und/oder zum Vorheizen der Brennkraftmaschine realisiert werden.

Der Reformer 5 ist in üblicher Weise so ausgestaltet, dass er aus einem wasserstoffhaltigen Brennstoff das Anodengas erzeugen kann. Zu diesem Zweck ist der Reformer 5 zum einen über eine Brennstoffleitung 13 an eine Brennstoffversorgung 14 und über eine Oxidatorleitung 15 an eine Oxidatorversorgung 16 angeschlossen. Die Brennstoffversorgung 14 umfasst hier einen Brennstofftank 17 sowie eine Brennstoffpumpe 18. Zweckmäßig handelt es sich bei dem im Reformer 5 umgesetzten Brennstoff um denselben Brennstoff, den auch die Brennkraftmaschine verwendet. Der Oxidator enthält Sauerstoffgas und ist insbesondere Luft. Die Oxidatorversorgung 16 kann beispielsweise ein Luftfilter 19 umfassen.

Zweckmäßig baut der Wärmeübertrager 4 vergleichsweise kompakt. Um eine Überhitzung des Wärmeübertragers 4 durch die Hauptbrennerabgase zu vermeiden, wird dem Kathodenabgas zusätzlicher Oxidator, vorzugsweise Luft, zugemischt. Hierzu ist an die Kathodenabgasleitung 8 eine weitere Oxidatorleitung 20 angeschlossen, die ebenfalls mit der Oxidatorversorgung 16 verbunden ist.

Erfindungsgemäß ist nun das Brennstoffzellensystem 1 außerdem mit einem Startbrenner 21 ausgestattet. Dieser Startbrenner 21 kann einen wasserstoffhaltigen Brennstoff mit einem Sauerstoffgas enthaltenden Oxidator verbrennen, wobei heiße Verbrennungsabgase entstehen, die im Folgenden als Startbrennerabgase bezeichnet werden. Der Startbrenner 21 ist dabei so in das Brennstoffzellensystem 1 eingebunden, dass entweder seine heißen Startbrennerabgase bei einem Startbetrieb des Brennstoffzellensystems 1 dem Anodengas oder dem Kathodengas oder dem Anodenabgas oder dem Kathodenabgas zugemischt werden oder die Startbrennerabgase das Anodengas oder Kathodengas oder das Anodenabgas oder das Kathodenabgas bilden. In jedem Fall kann mit Hilfe des Startbrenners 21 eines der genannten Gase oder Abgase vorgewärmt werden, und zwar relativ rasch, da ein derartiger, konventionell arbeitender Startbrenner 21 nach seinem Start unverzüglich heiße Startbrennerabgase erzeugt.

Der Startbrenner 21 ist über eine weitere Brennstoffleitung 22 zweckmäßig an dieselbe Brennstoffversorgung 14 angeschlossen wie der Reformer 5. Das bedeutet, dass der Startbrenner 21 und der Reformer 5 mit demselben Brennstoff, vorzugsweise mit dem Brennstoff der Brennkraftmaschine betrieben werden. Desweiteren ist der Startbrenner 21 an eine weitere Oxidatorleitung 23 angeschlossen, die den Startbrenner 21 mit einem geeigneten Sauerstoffgas enthaltenden Oxidator, vorzugsweise Luft, versorgt. Die Oxidatorleitung 23 des Startbrenners 21 ist zweckmäßig an dieselbe Oxidatorversorgung 16 angeschlossen, die auch den Reformer 5 mit Oxidator versorgt. An diese Oxidatorversorgung 16 ist außerdem die Kathodenleitung 7 angeschlossen, da das Kathodengas zweckmä-βig durch denselben Oxidator gebildet ist, also regelmäßig durch Luft.

Um den Oxidator bzw. den von der Oxidatorversorgung 16 bereitgestellten Oxidatorstrom auf die jeweiligen Verbraucher beliebig aufteilen zu können, ist außerdem eine Oxidator-Ventilanordnung 24 vorgesehen. Desweiteren ist in entsprechender Weise eine Brennstoff-Ventilanordnung 25 vorgesehen, mit deren Hilfe der Brennstoff bzw. der Brennstoffstrom auf die einzelnen Verbraucher beliebig aufgeteilt werden kann.

Bei den Ausführungsformen der Fig. 1, 3 und 4 ist außerdem eine Hauptbrennerabgas-Ventilanordnung 26 vorgesehen, die in der Hauptbrennerabgasleitung 10 zwischen dem Wärmeübertrager 4 und der Standheizeinrichtung 11 angeordnet ist. Die Hauptbrennerabgas-Ventilanordnung 26 kann den Hauptbrennerabgasstrom beliebig auf die Standheizeinrichtung 11 und über eine Zusatzleitung 27, in der außerdem eine Hilfspumpe 28 angeordnet sein kann, auf den Reformer 5 aufteilen. Außerdem kann gemäß Fig. 1 ein Bypass 36 zur Umgehung der Standheizeinrichtung 11 vorgesehen sein, der ebenfalls mit der Hauptbrennerabgas-Ventilanordnung 26 steuerbar ist.

Vorzugsweise wird für die Brennstoffzelle 2 eine HochTemperatur-Brennstoffzelle verwendet, insbesondere vom SOFC-Typ (Solid Oxid Fuel Cell). Die optimale Betriebstemperatur dieser Brennstoffzelle 2 ist demnach relativ hoch. Erfindungsgemäß sind daher die Brennstoffzelle 2, der Hauptbrenner 3 und der Wärmeübertrager 4 in einer Isolationsbox 29 untergebracht, die eine möglichst hochwertige thermische Isolation der genannten Komponenten bietet. Erfindungsgemäß ist der Startbrenner 21 ebenfalls innerhalb dieser Isolationsbox 29 angeordnet. Auf diese Weise werden kurze Transportwege für die vom Startbrenner 21 bereitgestellte Wärme realisiert, was die Effektivität der Vorheizung verbessert.

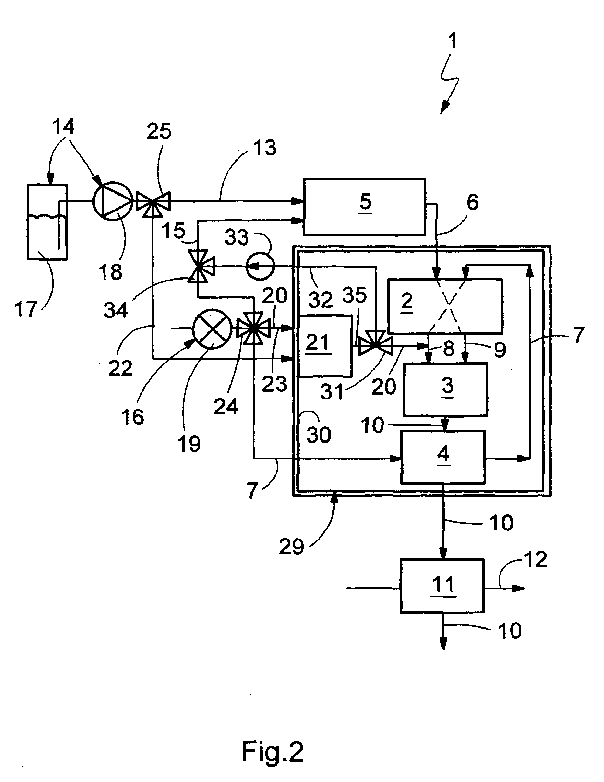

Bei den Ausführungsformen der Fig. 1 und 2 ist der Startbrenner 21 in die Oxidatorleitung 20 eingebunden, die den Hauptbrenner 3 mit Oxidator versorgt. Da diese Oxidatorleitung 20 ohnehin vorhanden ist, ist der Aufwand zur Realisierung des Startbrenners 21 klein.

Desweiteren ist der Startbrenner 21 unmittelbar an einer Außenwand 30 der Isolationsbox 29 angeordnet, so dass die den Startbrenner 21 mit Brennstoff versorgende Brennstoffleitung 22 (Startbrennerbrennstoffleitung 22) durch diese Außenwand 30 hindurch direkt an den Startbrenner 21 angeschlossen ist. Ebenso kann der Startbrenner 21 bei einer anderen Ausführungsform eingangsseitig zumindest teilweise einen Abschnitt der Außenwand 30 bilden, so dass die Brennstoffleitung 22 durch diesen Abschnitt der Außenwand 30 hindurch direkt an den Startbrenner 21 angeschlossen ist. Auf diese Weise wird eine Brennstoffführung innerhalb der Isolationsbox 29 vermieden. Dies ist im Hinblick auf die im Normalbetrieb des Brennstoffzellensystems 1 innerhalb der Isolationsbox 29 auftretenden relativ hohen Temperaturen von Vorteil.

Durch die Einbindung des Startbrenners 21 in die Oxidatorleitung 20 des Hauptbrenners 3 bildet der Startbrenner 21 mit seinen Startbrennerabgasen quasi das Kathodenabgas der Brennstoffzelle 2. Bzw. werden die Startbrennerabgase dem Kathodenabgas beigemischt. Während des Startbetriebs strömen somit die heißen Startbrennerabgase über die Kathodenabgasleitung 8 in den Hauptbrenner 3 ein. Vom Hauptbrenner 3 gelangen die heißen Startbrennerabgase in den Wärmeübertrager 4. Im Wärmeübertrager 4 kann nun die Wärme der Hauptbrennerabgase auf das Kathodengas übertragen werden, was zu einer entsprechenden Vorwärmung der Brennstoffzelle 2 führt. Die Brennstoffzelle 2 kann bei dieser Ausgestaltung somit vorgewärmt werden, ohne dass sie dabei mit den Hauptbrennerabgasen direkt in Kontakt kommt.

Entsprechend Fig. 2 kann eine Startbrennerabgas-Ventilanordnung 31 vorgesehen sein, die es ermöglicht, die Startbrennerabgase beliebig auf den Hauptbrenner 3 und den Reformer 5 aufzuteilen. Hierzu ist die Startbrennerabgas-Ventilanordnung 31 zwischen dem Startbrenner 21 und der Kathodenabgasleitung 8 in der Oxidatorleitung 20 des Hauptbrenners 3 angeordnet. Eine Rückführleitung 32, in der eine weitere Hilfspumpe 33 angeordnet sein kann, ist an die Oxidatorleitung 15 des Reformers 5 angeschlossen. Zweckmäßig erfolgt dieser Anschluss über eine weitere Ventilanordnung 34. Auf diese Weise kann auch der Reformer 5 durch die Startbrennerabgase vorgewärmt werden.

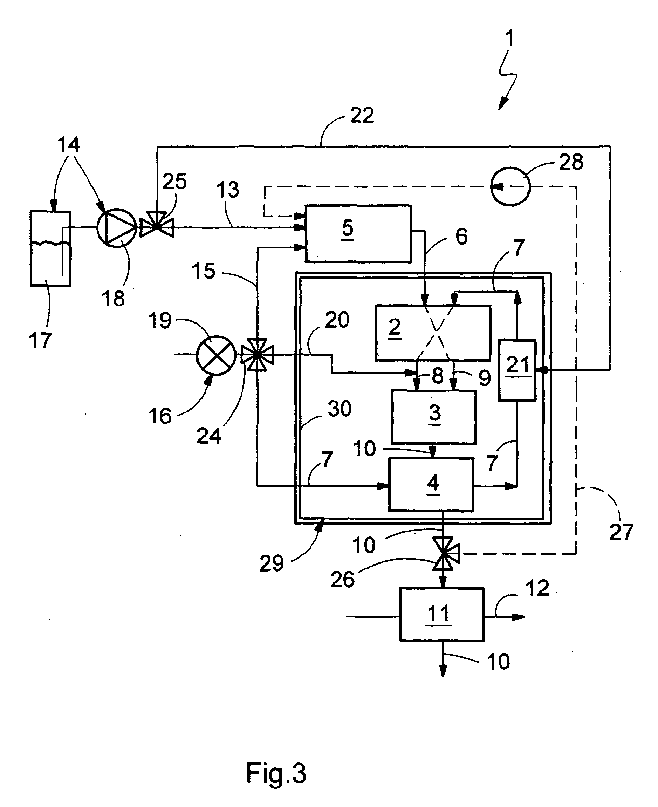

Bei der Ausführungsform gemäß Fig. 3 ist der Startbrenner 21 in die Kathodengasleitung 7 eingebaut, und zwar zwischen der Brennstoffzelle 2 und dem Wärmeübertrager 4. Bei dieser Ausführungsform bilden die Startbrennerabgas unmittelbar das Kathodengas, das der Brennstoffzelle 2 kathodenseitig zugeführt wird. Insoweit erfolgt hier eine unmittelbare Beaufschlagung der Brennstoffzelle 2 mit den Startbrennerabgasen. Die Aufheizung der Brennstoffzelle 2 ist hierdurch besonders effektiv.

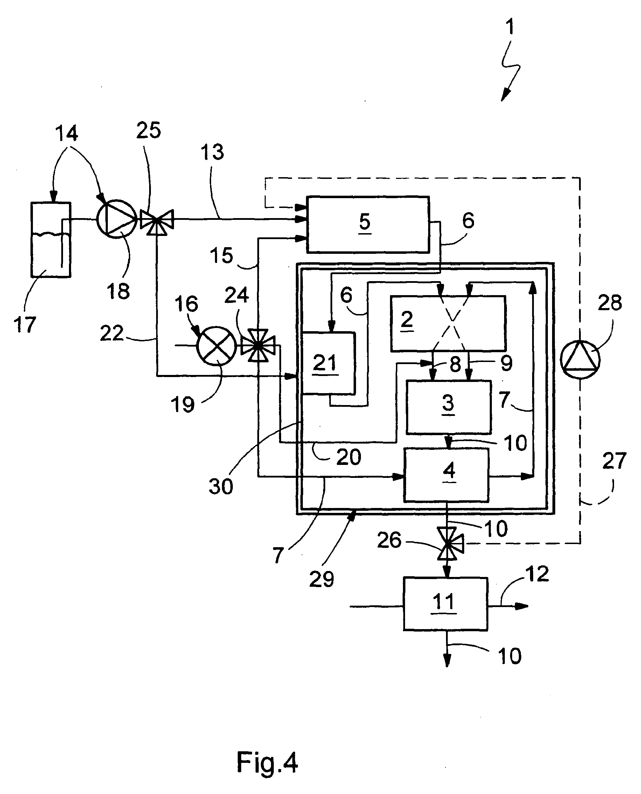

Entsprechend Fig. 4 kann bei einer anderen Ausführungsform der Startbrenner 21 in der Anodengasleitung 6 angeordnet sein. Auf diese Weise bilden die Startbrennerabgase das Anodengas, das während des Startbetriebs der Brennstoffzelle 2 zugeführt wird. Auch hier erfolgt eine unmittelbare Beaufschlagung der Brennstoffzelle 2 mit Startbrennerabgasen, allerdings anodenseitig.

Desweiteren ist es grundsätzlich möglich, den Startbrenner 21 in die Kathodenabgasleitung 8 einzubinden. Alternativ ist es ebenso möglich, den Startbrenner 21 in die Anodenabgasleitung 9 einzubauen.

Weitere Einbaukonfigurationen ergeben sich dadurch, dass eine die Startbrennerabgase vom Startbrenner 21 wegführende Startbrennerabgasleitung 35 an die Anodenleitung 6 oder an die Kathodenleitung 7 oder an die Kathodenabgasleitung 8 (vgl. Fig. 1 und 2) oder an die Anodenabgasleitung 9 angeschlossen ist. Bei der in Fig. 1 gezeigten Ausführungsform entspricht diese Startbrennerabgasleitung 35 dem stromab des Startbrenners 21 verlaufenden Abschnitt der Oxidatorleitung 20 des Hauptbrenners 3. Ebenso entspricht bei dieser Ausführungsform die den Startbrenner 21 mit Oxidator versorgende Oxidatorleitung 23 dem stromauf des Startbrenners 21 verlaufenden Abschnitt der Oxidatorleitung 20 des Hauptbrenners 3.

## Patentansprüche

1. Brennstoffzellensystem eines Kraftfahrzeugs,
- mit einer Brennstoffzelle (2) zum Verstromen eines Wasserstoffgas enthaltenden Anodengases und eines Sauerstoffgas enthaltenden Kathodengases,
- mit einem Hauptbrenner (3) zum Verbrennen von Anodenabgas der Brennstoffzelle (2) und Kathodenabgas der Brennstoffzelle (2),
- wobei ein Startbrenner (21) zum Verbrennen eines wasserstoffhaltigen Brennstoffs mit einem Sauerstoffgas enthaltenden Oxidator vorgesehen ist, der so in das Brennstoffzellensystem (1) eingebunden ist, dass während eines Startbetriebs Verbrennungsabgase des Startbrenners (21) eines der folgenden Gase bilden oder einem der folgenden Gase zugemischt sind: Anodengas oder Anodenabgas oder Kathodengas oder Kathodenabgas,
- wobei die Brennstoffzelle (2) und der Hauptbrenner (3) sowie der Startbrenner (21) in einer Isolationsbox (29) angeordnet sind,
**dadurch gekennzeichnet,**
- **dass** der Startbrenner (21) eingangsseitig an einer Außenwand (30) der Isolationsbox (29) angeordnet ist oder einen Abschnitt der Außenwand (30) bildet,
- **dass** eine den Startbrenner (21) mit Brennstoff versorgende Startbrennerbrennstoffleitung (22) durch diese Außenwand (30) oder durch besagten Abschnitt hindurch direkt in den Startbrenner (21) eingeführt ist.

2. Bren.nstoffzellensystem nach Anspruch 1,
**dadurch gekennzeichnet,**
**dass** ein Reformer (5) zum Erzeugen des Anodengases aus einem wasserstoffhaltigen Brennstoff vorgesehen ist.

3. Brennstoffzellensystem nach Anspruch 2,
**dadurch gekennzeichnet,**
**dass** eine Brennstoff-Ventilanordnung (25) zum Verteilen eines gemeinsamen Brennstoffstroms auf den Startbrenner (21) und den Reformer (5) vorgesehen ist.

4. Brennstoffzellensystem nach Anspruch 2 oder 3,
**dadurch gekennzeichnet,**
**dass** eine Startbrennerabgas-Ventilanordnung (31) zum Verteilen eines Startbrennerabgasstroms auf den Hauptbrenner (3) und den Reformer (5) vorgesehen ist.

5. Brennstoffzellensystem nach einem der Ansprüche 1 bis 4,
**dadurch gekennzeichnet,**
**dass** eine Oxidator-Ventilanordnung (24) zum Verteilen eines gemeinsamen Oxidatorstroms auf wenigstens zwei Mitglieder folgender Gruppe vorgesehen ist: Startbrenner (21), Brennstoffzelle (2), Reformer (5), Hauptbrenner (3).

6. Brennstoffzellensystem nach einem der Ansprüche 1 bis 5,
**dadurch gekennzeichnet,**
**dass** eine Standheizeinrichtung (11) zum Beheizen eines Fahrzeuginneraums und/oder zum Vorheizen einer Brennkraftmaschine des Fahrzeugs mittels Wärme aus den Verbrennungsabgasen des Hauptbrenners (3) vorgesehen ist.

7. Brennstoffzellensystem nach den Ansprüchen 2 und 6,
**dadurch gekennzeichnet,**
**dass** eine Hauptbrennerabgas-Ventilanordnung (26) zum Verteilen eines Hauptbrennerabgasstroms auf die Standheizeinrichtung (11) und den Reformer (5) vorgesehen ist.

8. Brennstoffzellensystem nach einem der Ansprüche 1 bis 7,
**dadurch gekennzeichnet,**
**dass** ein Wärmeüberträger (4) zum Vorwärmen des Kathodengases mittels wärme aus den Verbrennungsabgasen des Hauptbrenners (3) vorgesehen ist.

9. Brennstoffzellensystem nach einem der Ansprüche 1 bis 8,
**dadurch gekennzeichnet,**
- **dass** der Startbrenner (21) in eine im Normalbetrieb des Brennstoffzellensystems (1) Anodengas der Brennstoffzelle (2) zuführende Anodengasleitung (6) eingebaut ist, oder
- **dass** der Startbrenner (21) in eine im Normalbetrieb des Brennstoffzellensystems (1) Kathodengas der Brennstoffzelle (2) zuführende Kathodengasleitung (7) eingebaut ist, oder
- das der Startbrenner (21) in eine im Normalbetrieb des Brennstoffzellensystems (1) Anodenabgas dem Hauptbrenner (3) zuführende Anodenabgasleitung (9) eingebaut ist, oder
- **dass** der Startbrenner (21) in eine im Normalbetrieb des Brennstoffzellensystems Kathodenabgas dem Hauptbrenner (3) zuführende Kathodenabgasleitung (8) eingebaut ist, oder
- **dass** der Startbrenner (21) in eine im Normalbetrieb des Brennstoffzellensystems (1) Sauerstoffgas enthaltenden Oxidator dem Hauptbrenner (3) zuführende Oxidatorleitung (20) eingebaut ist.

10. Brennstoffzellensystem nach einem der Ansprüche 1 bis 8,
**dadurch gekennzeichnet,**
**dass** der Startbrenner (21) ausgangsseitig eine Startbrennerabgasleitung (35) aufweist, die an eine im Normalbetrieb des Brennstoffzellensystems (1) Anodengas der Brennstoffzelle (2) zuführende Anodengasleitung (6) oder an eine im Normalbetrieb des Brennstoffzellensystems (1) Kathodengas der Brennstoffzelle (2) zuführende Kathodengasleitung (7) oder an eine im Normalbetrieb des Brennstoffzellensystems (1) Anodenabgas dem Hauptbrenner (3) zuführende Anodenabgasleitung (9) oder an eine im Normalbetrieb des Brennstoffzellensystems (1) Kathodenabgas dem Hauptbrenner (3) zuführende Kathodenabgasleitung (8) oder an eine im Normalbetrieb des Brennstoffzellensystems (1) Sauerstoffgas enthaltenden oxidator dem Hauptbrenner (3) zuführende Oxidatorleitung (20) angeschlossen ist.

## Claims

1. A fuel cell system of a motor vehicle,
- with a fuel cell (2) for the conversion into electricity of an anode gas containing a hydrogen gas and a cathode gas containing an oxygen gas,
- with a main burner (3) for combusting anode exhaust gas of the fuel cell (2) and cathode exhaust gas of the fuel cell (2),
- wherein a starting burner (21) for combusting a fuel containing hydrogen with an oxidant containing oxygen gas is provided which is so incorporated in the fuel cell system (1) that during a starting operation combustion exhaust gases of the starting burner (21) form one of the following gases or are admixed to one of the following gases; anode gas or anode exhaust gas or cathode gas or cathode exhaust gas,
- wherein the fuel cell (2) and the main burner (3) as well as the starting burner (21) are arranged in an insulation box (29), **characterized in that**
- the starting burner (21) on the inlet side is arranged on an outer wall (30) of the insulation box (29) or forms a section of the outer wall (30),
- **in that** a starting burner fuel line (22) supplying the starting burner (21) with fuel is introduced directly into the starting burner (21) through this outer wall (30) or through said section.

2. The fuel cell system according to Claim 1, **characterized in that** a reformer (5) for generating the anode gas from a fuel containing hydrogen is provided.

3. The fuel cell system according to Claim 2, **characterized in that** a fuel valve arrangement (25) for distribution of a common fuel current over the starting burner (21) and the reformer (5) is provided.

4. The fuel cell system according to Claim 2 or 3, **characterized in that** a starting burner exhaust gas valve arrangement (31) for the distribution of a starting burner exhaust gas flow over the main burner (3) and the reformer (5) is provided.

5. The fuel cell system according to any one of the Claims 1 to 4, **characterized in that** an oxidant valve arrangement (24) for distribution of a common oxidant flow over at least two members of the following group is provided: starting burner (21), fuel cell (2), reformer (5), main burner (3).

6. The fuel cell system according to any one of the Claims 1 to 5, **characterized in that** a stationary heating device (11) for heating a vehicle interior and/or for preheating a combustion engine of a vehicle by means of heat from the combustion exhaust gases of the main burner (3) is provided.

7. The fuel cell system according to Claims 2 and 6, **characterized in that** a main burner exhaust gas valve arrangement (26) for the distribution of a main burner exhaust gas flow over the stationary heating device (11) and the reformer (5) is provided.

8. The fuel cell system according to any one of the Claims 1 to 7, **characterized in that** a heat transfer device (4) for preheating the cathode gas by means of the heat from the combustion exhaust gases of the main burner (3) is provided.

9. The fuel cell system according to any one of the Claims 1 to 8, **characterized in that**
- the starting burner (21) is installed in an anode gas line which in normal operation of the fuel cell system (1) feeds anode gas to the fuel cell (2), or
- that the starting burner (21) is installed in a cathode gas line (7) which in normal operation of the fuel cell system (1) feeds cathode gas to the fuel cell (2), or
- that the starting burner (21) is installed in an anode exhaust gas line (9) which in normal operation of the fuel cell system (1) feeds anode exhaust gas to the main burner (3), or
- the starting burner (21) is installed in a cathode exhaust gas line (8) which in normal operation of the fuel cell system feeds cathode exhaust gas to the main burner (3), or
- the starting burner (21) is installed in an oxidant line (20) which in normal operation of the fuel cell system (1) feeds oxygen gas contained in the oxidant to the main burner (3).

10. The fuel cell system according to any one of the Claims 1 to 8, **characterized in that** the starting burner (21) on the outlet side comprises a starting burner exhaust line (35) which is connected to an anode gas line (6) which in normal operation of the fuel cell system (1) feeds anode gas to the fuel cell (2) or to a cathode gas line (7) which in normal operation of the fuel cell system (1) feeds cathode gas to the fuel cell (2), or to an anode exhaust gas line (9) which in normal operation of the fuel cell system (1) feeds anode exhaust gas to the main burner (3), or to a cathode exhaust gas line (8) which in normal operation of the fuel cell system (1) feeds cathode exhaust gas to the main burner (3), or to an oxidant line (20) which in normal operation of the fuel cell system (1) is to feed oxygen gas containing oxidant to the main burner (3).

## Revendications

1. Système de cellules de combustible d'un véhicule automobile, comprenant
- une cellule de combustible (2) pour la transformation en courant d'un gaz d'anode contenant de l'hydrogène et d'un gaz de cathode contenant de l'oxygène,
- un brûleur principal (3) pour la combustion de gaz brûlés d'anode dans la cellule de combustible (2) et de gaz brûlés de cathode de la cellule de combustible (2),
- un brûleur de démarrage (21) étant prévu pour la combustion d'un combustible contenant de l'hydrogène avec un oxydant contenant de l'azote qui est intégré dans le système de cellule de combustible (1), de telle sorte que des gaz brûlés de combustion du brûleur de démarrage (21) forment l'un des gaz suivants pendant une exploitation de démarrage ou sont mélangés avec l'un des gaz suivants : gaz d'anode ou gaz brûlés d'anode ou gaz de cathode ou gaz brûlés de cathode ;
- la cellule de combustible (2) et le brûleur principal (3) ainsi que le brûleur de démarrage (21) étant disposés dans un boîtier d'isolation (29),
**caractérisé en ce que**
- le brûleur de démarrage (21) est disposé côté entrée sur une paroi extérieure (30) du boîtier d' isolation (29) ou forme une partie de la paroi extérieure (30),
- **en ce qu'**une conduite de combustible du brûleur de démarrage (22) alimentant le brûleur de démarrage (21) en combustible est introduite à travers cette paroi extérieure (30) ou ladite partie directement dans le brûleur de démarrage (21).

2. Système de cellules de combustible selon la revendication 1, **caractérisé en ce que** un reformeur (5) est prévu pour générer le gaz d'anode à partir d'un combustible à base d'hydrogène.

3. Système de cellules de combustible selon la revendication 2, **caractérisé en ce que** un agencement de soupape à combustible (25) est prévu pour la répartition d'un flux de combustible commun sur le brûleur de démarrage (21) et le reformeur (5).

4. Système de cellules de combustible selon la revendication 2 ou 3, **caractérisé en ce que** un agencement de soupape à gaz brûlés de brûleur de démarrage (31) est prévu pour la répartition d'un flux de gaz brûlés de brûleur de démarrage sur le brûleur principal (3) et le reformeur (5).

5. Système de cellules de combustible selon l'une quelconque des revendications 1 à 4, **caractérisé en ce que** un agencement de soupape à oxydant (24) est prévu pour la répartition d'un flux d'oxydant commun sur au moins deux éléments du groupe suivant : brûleur de démarrage (21), cellule de combustible (2), reformeur (5), brûleur principal (3).

6. Système de cellules de combustible selon l'une quelconque des revendications 1 à 5, **caractérisé en ce que** un dispositif de chauffage auxiliaire (11) est prévu pour le chauffage d'un habitacle de véhicule et/ou pour le préchauffage d'un moteur à combustion interne du véhicule au moyen de chaleur provenant des gaz brûlés de combustion du brûleur principal (3).

7. Système de cellules de combustible selon les revendications 2 et 6, **caractérisé en ce que** un agencement de vanne (26) à gaz brûlés de brûleur principal est prévu pour la répartition d'un flux de gaz brûlés de brûleur principal sur le dispositif de chauffage auxiliaire (11) et le reformeur (5).

8. Système de cellules de combustible selon l'une quelconque des revendications 1 à 7, **caractérisé en ce que** un échangeur de chaleur (4) est prévu pour le préchauffage du gaz de cathode au moyen de chaleur provenant des gaz brûlés de combustion du brûleur principal (3).

9. Système de cellules de combustible selon l'une quelconque des revendications 1 à 8, **caractérisé en ce que**
- le brûleur de démarrage (21) est intégré dans une conduite de gaz d'anode (6) amenant en mode normal du système de cellules de combustible (1) du gaz d'anode à la cellule de combustible (2), ou
- **en ce que** le brûleur de démarrage (21) est intégré dans une conduite de gaz de cathode (7) amenant en mode normal du système de cellules de combustible (1) du gaz de cathode à la cellule de combustible (2), ou
- **en ce que** le brûleur de démarrage (21) est intégré dans une conduite de gaz brûlés d'anode (9) amenant en mode normal du système de cellules de combustible (1) des gaz brûlés d'anode au brûleur principal (3), ou
- **en ce que** le brûleur de démarrage (21) est intégré dans une conduite de gaz brûlés de cathode (8) amenant en mode normal du système de cellule de combustible du gaz brûlés de cathode au brûleur principal (3) ou
- **en ce que** le brûleur de démarrage (21) est intégré dans une conduite d'oxydant (20) amenant en mode normal du système de cellules de combustible (1) de l'oxydant contenant du gaz d'oxygène au brûleur principal (3).

10. Système de cellules de combustible selon l'une quelconque des revendications 1 à 8, **caractérisé en ce que** si le brûleur de démarrage (21) présente côté sortie une conduite de gaz brûlés de brûleur de démarrage (35), qui est raccordée à une conduite de gaz d'anode (6) amenant en mode normal le système de cellules de combustible (1) du gaz d'anode à la cellule de combustible (2) ou à une conduite de gaz de cathode (7) amenant en mode normal le système de cellules de combustible (1) du gaz de cathode à la cellule de combustible (2) ou à une conduite de gaz brûlés d'anode (9) amenant en mode normal du système de cellule de combustible (1) des gaz brûlés d'anode au brûleur principal (3) ou à une conduite de gaz brûlés de cathode (8) amenant en mode normal du système de cellules de combustible (1) des gaz brûlés de cathode au brûleur principal (3) ou à une conduite d'oxydant (20) amenant en mode normal du système de cellule de combustible (1) de l'oxydant contenant du gaz d'oxygène au brûleur principal (3).
